# EUROPEAN PATENT SPECIFICATION

(11) **EP 3 591 283 B1**
(45) Date of publication and mention of the grant of the patent: **22.09.2021**
(21) Application number: 19184529.6
(22) Date of filing: 04.07.2019
(51) Int. Cl.: F21V 5/04, F21V 5/08, F21V 5/00, G02B 3/08, G02B 19/00, F25D 27/00, F21W 131/305, F21Y 103/10, F21Y 115/10

(54) **LIGHTING SYSTEM**
BELEUCHTUNGSSYSTEM
SYSTÈME D'ÉCLAIRAGE

(30) Priority: 04.07.2018 CN 201810727324
(43) Date of publication of application: 08.01.2020
(73) Proprietor: Self Electronics Co., Ltd., Ningbo 315103 (CN); SELF ELECTRONICS Germany GmbH, 51149 Köln (DE); Lin, Wanjiong, Ningbo 315103 (CN)
(72) Inventor: He, Zuping, Ningbo, 315103 (CN); Zhang, Fawei, Ningbo, 315103 (CN); Wu, Dong, Ningbo, 315103 (CN)
(74) Representative: 2K Patentanwälte Blasberg Kewitz & Reichel

(56) References cited:
- US-A1- 2016 091 173
- US-A1- 2016 146 426
- US-A1- 2018 045 933
- US-B1- 7 559 672

## Description

### RELATED APPLICATION

This application claims priority to a Chinese Patent Application No. CN 201810727324.3, filed on July 4, 2018.

### FIELD OF THE TECHNOLOGY

The present invention relates to the field of optics, with particular emphasis on a LED lighting system.

### BACKGROUND OF THE INVENTION

LED lamps are widely used in daily life, especially in the field of household appliances, because of their advantages of low voltage, high luminous efficiency, pure color and no impurities.

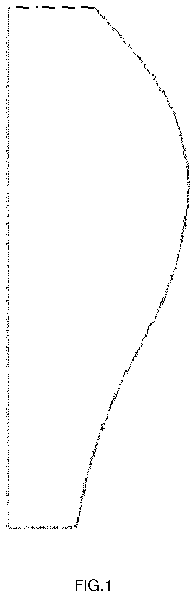

For example, refrigerating cabinet acts as an indispensable appliance in People's Daily life, LED lighting is widely used in the refrigerating cabinet. In order to achieve good lighting, most LED lights need to be processed by a special-shaped plano-convex lens before being emitted. The structure of the special-shaped plano-convex lens is shown in figure 1. However, due to the convergent effect of a plano-convex lens, the emitted light will be brighter and it is easy to produce glare. To solve this problem, researchers usually put an anti-dazzle light cover on the lamp body.

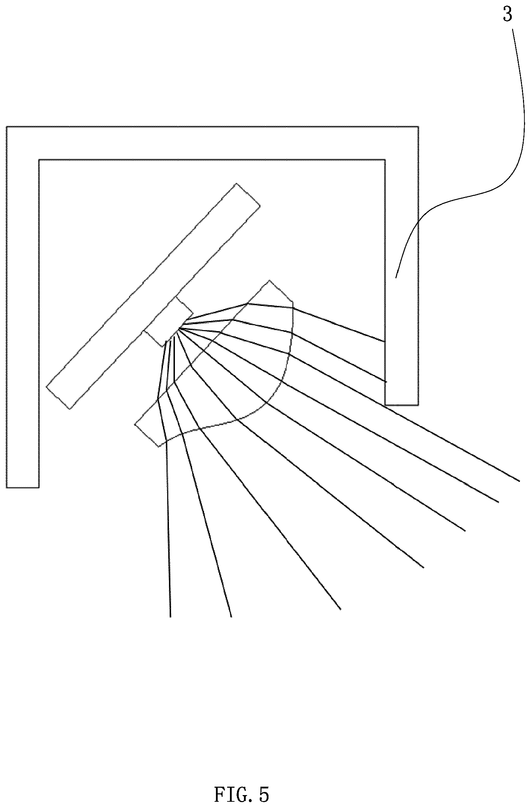

However, this brings another problem. Due to the limitation of the width of the lamp body and the anti-dazzle light cover, the anti-dazzle light cover blocks part of the light, making the overall lighting effect low and insufficient. As shown in figure 5, due to meet the uniform illumination, plano-convex lens can only be placed in the position shown, That is, the convex sphere should be close to the side of the anti-dazzle light cover, and not away from the anti-dazzle light cover. The convex sphere of the plano-convex lens occupies a large space, making the distance between the plano-convex lens and the anti-dazzle light cover very close. When the LED light is emitted from the lens, part of the light will be blocked by the anti-dazzle light cover, resulting in less light available and affecting the illumination.

US 7 559 672 B1 discloses a linear illumination lens with Fresnel facets. The linear Fresnel lens for LED illumination is configured initially by using a meridional flux-assignment method and is then corrected by assessing the three-dimensional flux distribution of individual facets. The facet angles are slightly altered as required to produce uniformity. A variety of specialized lens shapes are generated, such as for illuminating shelves in commercial refrigerator food-display cases. The lens shapes are suitably thin for economical production by extrusion.

US 2016/0091173 A1 discloses array-based lighting systems and methods of manufacturing. Such a lighting system includes a substrate, an array of light-emitting diodes (LEDs), and a light cover. The array of LEDs is disposed on the substrate and is arranged in a plurality of LED rows and a plurality of LED columns. The light cover is positioned over the array of LEDs and includes an array of optical elements. Each optical element is substantially aligned with a LED.

US 2018/0045933 A1 discloses an optical system and LED wash luminaire employing an lens with a first Fresnel functional surface and a second functional surface comprised of a plurality of out of focus microlenses in bands of different focal lengths in combination with specially shaped reflector(s) to achieve a more even light distribution on a surface area with a wide range of distances from the luminaire.

US 2016/0146426 A1 discloses a lens for a illuminating device. The lens includes a lens portion, an outer periphery and a prism portion. The lens portion is disposed at a middle portion of the lens, has an outline that is non-circular, and includes at least one curved surface. The outer periphery surrounds the lens portion. The prism portion is disposed between the lens portion and the outer periphery, and includes at least two undulated sections. Each undulated section has at least one undulated surface.

### BRIEF SUMMARY OF THE INVENTION

Therefore, the present invention provides a lighting system according to claim 1. The lighting system uses microarray lens for illumination, the height of the lens is reduced, and then the distance between the lens and the anti-dazzle light cover becomes longer, so as to reduce the light blocked by the anti-dazzle light cover and improve the efficiency of the whole lamp.

The technical solution adopted by the present invention to solve the above problems is as follows: A lighting system, comprising: microarray lens; light source at the light incoming side of the microarray lens and anti-dazzle light cover above the front end of the light outgoing side, wherein the microarray lens is an asymmetric Fresnel lens and wherein the surface of the light outgoing side of the microarray lens is provided with several strips with different structures distributed up and down crosswise.

The invention is characterized in that at least one of the strips is formed from top to bottom with a positive curvature towards the lower end of the microarray lens, and at least one other of the strips is formed towards the upper end of the microarray lens with positive curvature, and at least yet another one of the strips is formed towards the lower end of the microarray lens with negative curvature.

Preferred embodiment may have the following features:

The at least one strip at the upper end of the microarray lens is convex lens structure, and the other at least one strip at the lower end of the microarray lens is concave lens structure.

The strips change from top to bottom with a positive curvature that decreases first and then increases in curvature, and then changes with a negative curvature that increases in absolute value.

The light source is LED light source.

The microarray lens is arranged in parallel with the LED light source in the length direction of the LED light source.

Compared with the existing technology, the advantages of the invention is: flat convex lens will ever replace asymmetric Fresnel lens, Fresnel lenses are thinner than convex lenses, thus the distance between lens and anti-dazzle light cover increases, the light refracted through the lens is further away from the anti-dazzle light cover, reducing the amount of light falling on the anti-dazzle light cover, that is, less light is blocked by the anti-dazzle light cover, and more light is available, thus improve the efficiency of the whole lamp light, and ensure the effect of anti-dazzle at the same time.

### BRIEF DESCRIPTION OF THE DRAWINGS

The drawings described herein are intended to promote a further understanding of the present invention, as follows:
FIG. 1 is a schematic diagram of plano-convex lens structure of the prior art.
FIG. 2 is a schematic diagram of a frontal structure of an embodiment of a microarray lens of the present invention.
FIG. 3 is a side view of figure 2.
FIG. 4 is a light path rendering of an embodiment of the corresponding lighting system of the present invention.
Figure 5 is a rendering of the lighting system in the existing technology.

### DETAILED DESCRIPTION OF THE INVENTION

The present application is illustrated by way of the following detailed description based on of the accompanying drawings. It should be noted that illustration to the embodiment in this application is not intended to limit the invention.

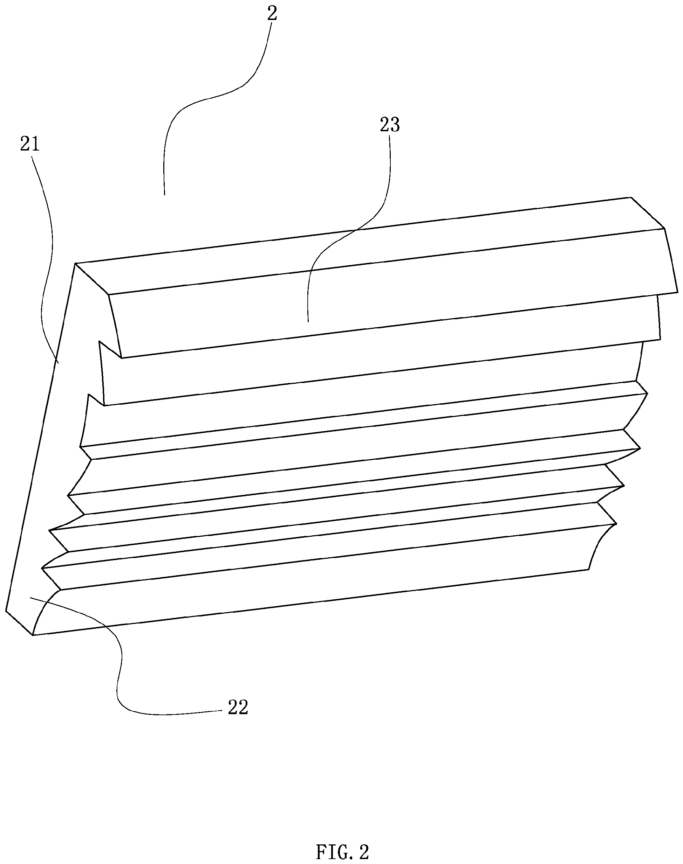

For introductory interpretation, FIG. 2-4 shows an embodiment of the microarray lens and corresponding lighting system in this application. At present, most lighting systems use LED as the light source in many fields. In order to facilitate the explanation, this application is illustrated with the LED lighting system used in the refrigerator as an example. It can be thought that one or more lighting systems can be used for the refrigerator lighting. Only one lighting system and the corresponding microarray lens are explained here.

According to Fresnel lens design principle, the microarray lens applied in this present invention adopts asymmetric design. Depend on different lighting system using field, the installation angle and position of lamp body and the lens is also different. in the freezer, Since the light is deflected downward, that means the light has to come out of the top, so the upper portion of the lighting lens should be designed to have a positive refractive power, so that the light from the light source can be gathered into more distant.

The microarray lens comprises light incoming side of a smooth surface and light outgoing side with a concave and convex arrangement. in this example, the microarray lens 2 comprises light incoming side 21 located in front of an LED light source and light outgoing side 22 located behind the anti-dazzle light cover 3. The surface of the light outgoing side 22 is provided with several strips 23 with different structures distributed up and down, thereby forming asymmetric Fresnel lens. It should be noted that the structure of the strip is different from that of the strip, which may include different thickness, different direction of bending forming, different curvature and so on.

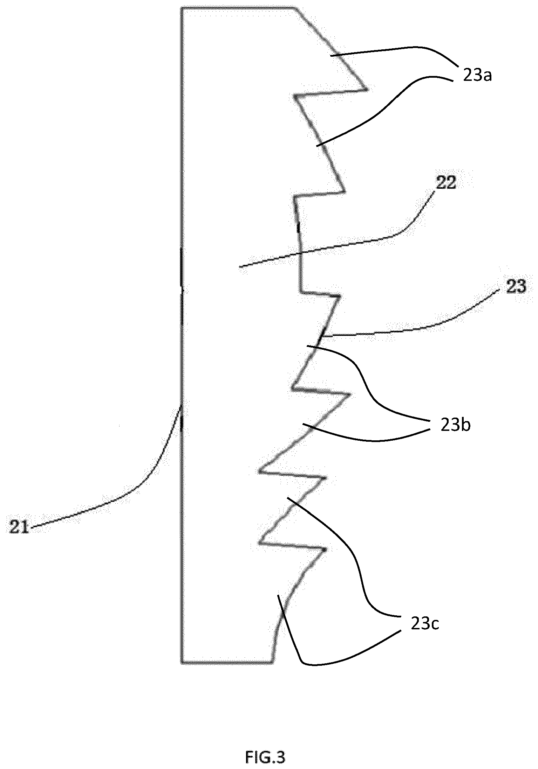

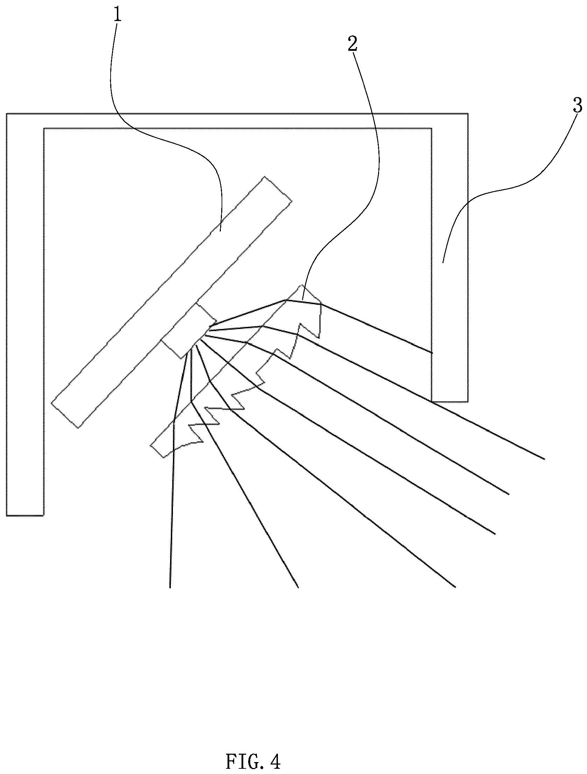

Specific to this embodiment, as shown in FIG. 2 and 4, the strips 23 on microarray lens 2 in this example are shaped with different curvature (see strips 23a, 23b and 23c) and the shaping direction is also different, and the root width of each strip is also different, thus forming an asymmetric Fresnel lens structure. The specific structure of the strips will be described in detail below. As shown in the section of figure 3, the strips 23 on the lens looks like sawteeth in the side view.

In this embodiment, as shown in FIG. 4, microarray lens 2 is set parallel to LED light source 1 in length direction so as to receive as much light from LED as possible. In order to fit the internal structure of the refrigerator and meet the light requirements, the LED light source 1 and the microarray lens 2 are installed at a certain angle, as shown in figure 4.

It can be thought that the inclined installation angle can be a range, and the included angle between the light source and the microarray lens can also be arranged in a non-parallel way. No matter which installation angle, as long as it finally meets the light irradiation requirements of the refrigerator. At the same time, it can be determined that the inclined installation angle and the angle between the light source and the microarray lens may be different due to the different objects used, which is not the focus of this present invention, so it is not explained in detail here.

Continue to see FIG. 3 and FIG. 4. In this embodiment, the anti-dazzle light cover 3 of the lighting system is disposed above the front end of the light outgoing side 22 of the microarray lens 2, as in the prior art, with reference to FIG. 5. The sawteeth on the microarray lens 2 is gradually dense from top to bottom, and the molding direction is gradually changed. Specifically, the sawteeth surface changes from the top to the bottom with a positive curvature, and is formed toward the lower end of the lens to form a convex lens, which is then positive. The curvature changes and is formed toward the upper end of the lens to form a convex lens, which is then changed with a negative curvature and shaped toward the lower end of the lens to form a concave lens.

When microarray lens 2 changes with this trend, the sawteeth on the upper end can project the LED light beam to the far side due to the focusing effect, while the sawteeth on the lower end aims the light beam of the LED light source towards the near side due to the scattering effect, so as to achieve uniform irradiation on the irradiation surface. It is based on this that the strong light emitted from the upper end is easy to generate glare, and he anti-dazzle light cover 3 is disposed at the front end of the light outgoing side 22 to effectively block part of the light, so as to reduce the visual pressure and discomfort caused by excessive light.

please refer to figure 4 and figure 5 together. As shown in figure 5, the convex curved surface of the plano-convex lens is close to the anti-dazzle light cover. When the light is emitted from the convex curved surface, part of the light is blocked by the anti-dazzle light cover. Compared with the plano-convex lens, the thickness of the microarray lens 2 is thin, as shown in FIG. 4, so that the distance between the lens and the anti-dazzle light cover 3 becomes larger, and at the same time, since the sawteeth at upper end of the lens is shaped toward the lower end of the lens. the light emitted angle is also more downward than that of the plano-convex lens, so that the light blocked by the anti-dazzle light cover is less, in other words, the amount of light that can be projected onto the illuminated surface is increased, and the illumination is improved, and the high light efficiency performance of the lighting system is also better play. Moreover, the Fresnel lens is more material-saving and less expensive to manufacture than a plano-convex lens.

It is easy to think that the degree of the sawteeth in the microarray lens 2 is biased toward the lower end or the upper end of the lens, that is, the curvature of the serrated surface can be freely set as needed. If excessive illumination is not desired, the sawteeth surface at the upper end of the lens can be made with a small curvature toward the direction of the lower end of the lens changes. If more illumination is desired, the sawteeth surface can be changed toward the lower end of the lens with a large curvature. In the present embodiment, the curved surface of the sawtooth changes with a positive curvature that decreases first and then increases, and then changes with a negative curvature that increases with an absolute value.

Understandably, the distance between the anti-dazzle light cover and the microarray lens can also be adjusted and selected during installation to further meet different lighting requirements. In addition, whether the strip of the microarray lens forms a similar convex lens on the upper end of the lens or a similar convex lens on the lower end of the lens, or whether the upper and lower strip of the microarray lens is a similar convex lens, can also be determined according to the actual object, scene and light requirements, it will not be expanded in detail here.

The above disclosure has been described by way of example and in terms of exemplary embodiment, and it is to be understood that the disclosure is not limited thereto.

## Claims

1. A lighting system, comprising:
microarray lens (2);
light source (1) at the light incoming side (21) of the microarray lens (2) and anti-dazzle light cover (3) above the front end of the light outgoing side (22);
wherein the microarray lens (2) is an asymmetric Fresnel lens,
wherein the surface of the light outgoing side (22) of the microarray lens (2) is provided
with several strips (23) with different structures distributed up and down crosswise,
**characterized in that**
at least one (23a) of the strips (23) is formed from top to bottom with a positive curvature towards the lower end of the microarray lens (2), and at least one other (23b) of the strips (23) is formed towards the upper end of the microarray lens (2) with positive curvature, and at least yet another one (23c) of the strips (23) is formed towards the lower end of the microarray lens (2) with negative curvature.

2. The lighting system as claimed in claim 1, wherein the at least one strip (23a) at the upper end of the microarray lens (2) is convex lens structure, and the at least one strip (23c) at the lower end of the microarray lens (2) is concave lens structure.

3. The lighting system as claimed in claim 1, wherein the strips (23) change from top to bottom with a positive curvature that decreases first and then increases in curvature, and then changes with a negative curvature that increases in absolute value.

4. The lighting system as claimed in claim 1, wherein the light source (1) is LED light source.

5. The lighting system as claimed in claim 4, wherein the microarray lens (2) is arranged in parallel with the LED light source in the length direction of the LED light source.

## Patentansprüche

1. Beleuchtungssystem, umfassend:
Microlinsenarray (2);
Lichtquelle (1) an der Lichteintrittsseite (21) des Microlinsenarrays (2) und Blendschutzabdeckung (3) über dem vorderen Ende der Lichtaustrittsseite (22);
wobei das Microlinsenarray (2) eine asymmetrische Fresnel-Linse ist,
wobei die Oberfläche der Lichtaustrittsseite (22) das Microlinsenarray (2) mit mehreren Streifen (23) mit unterschiedlichen Strukturen versehen ist, die oben und
unten quer verteilt sind,
**dadurch gekennzeichnet, dass**
mindestens einer (23a) der Streifen (23) ist von oben nach unten mit einer positiven Krümmung zum unteren Ende des Microlinsenarray (2) hin geformt ist, und mindestens ein anderer (23b) der Streifen (23) zum oberen Ende des Microlinsenarrays (2) hin mit positiver Krümmung geformt ist, und mindestens ein weiterer (23c) der Streifen (23) zum unteren Ende des Microlinsenarrays (2) hin mit negativer Krümmung geformt ist.

2. Beleuchtungssystem nach Anspruch 1, wobei der mindestens eine Streifen (23a) am oberen Ende des Microlinsenarrays (2) eine konvexe Linsenstruktur ist, und der mindestens eine Streifen (23c) am unteren Ende des Microlinsenarrays (2) eine konkave Linsenstruktur ist.

3. Beleuchtungssystem nach Anspruch 1, wobei die Streifen (23) von oben nach unten mit einer positiven Krümmung wechseln, die zunächst abnimmt und dann in der Krümmung zunimmt, und dann mit einer negativen Krümmung wechselt, die im Absolutwert zunimmt.

4. Das Beleuchtungssystem nach Anspruch 1, wobei die Lichtquelle (1) eine LED-Lichtquelle ist.

5. Beleuchtungssystem nach Anspruch 4, wobei das Microlinsenarray (2) parallel zur LED-Lichtquelle in Längsrichtung der LED-Lichtquelle angeordnet ist.

## Revendications

1. Un système d'éclairage, comprenant:
lentille de micro-réseau (2);
source de lumière (1) sur le côté d'entrée de la lumière (21) de la lentille de micro-réseau (2) et couvercle de lumière anti-éblouissement (3) au-dessus de l'extrémité avant du côté de sortie de la lumière (22) ;
dans lequel la lentille de micro-réseau (2) est une lentille de Fresnel asymétrique,
dans lequel la surface du côté de sortie de la lumière (22) de la lentille de micro-réseau (2) est munie de plusieurs bandes (23) avec des structures différentes distribuées vers le haut et vers le bas de manière transversale,
**caractérisé en ce que**
au moins une (23a) des bandes (23) est formée de haut en bas avec une courbure positive vers l'extrémité inférieure de la lentille de micro-réseau (2), et au moins une autre (23b) des bandes (23) est formée vers l'extrémité supérieure de la lentille de micro-réseau (2) avec une courbure positive, et au moins encore une autre (23c) des bandes (23) est formée vers l'extrémité inférieure de la lentille de micro-réseau (2) avec une courbure négative.

2. Le système d'éclairage selon la revendication 1, dans lequel la au moins une bande (23a) à l'extrémité supérieure de la lentille de micro-réseau (2) est une structure de lentille convexe, et la au moins une bande (23c) à l'extrémité inférieure de la lentille de micro-réseau (2) est une structure de lentille concave.

3. Le système d'éclairage selon la revendication 1, dans lequel les bandes (23) changent de haut en bas avec une courbure positive qui diminue d'abord et ensuite augmente en courbure, et ensuite change avec une courbure négative qui augmente en valeur absolue.

4. Système d'éclairage selon la revendication 1, dans lequel la source de lumière (1) est une source de lumière LED.

5. Système d'éclairage selon la revendication 4, dans lequel la lentille de micro-réseau (2) est disposée en parallèle avec la source de lumière LED dans la direction de la longueur de la source de lumière LED.
